# EUROPEAN PATENT SPECIFICATION

(11) **EP 3 940 878 B1**
(45) Date of publication and mention of the grant of the patent: **20.08.2025**
(21) Application number: 21179916.8
(22) Date of filing: 17.06.2021
(51) Int. Cl.: H01M 50/153, H01M 50/148, H01M 50/181, H01M 10/04, H01M 10/0525, H01M 50/109, H01M 50/159, H01M 50/171, H01M 10/052

(54) **RECHARGEABLE BATTERY**
WIEDERAUFLADBARE BATTERIE
BATTERIE RECHARGEABLE

(30) Priority: 15.07.2020 KR 20200087620
(43) Date of publication of application: 19.01.2022
(73) Proprietor: Samsung SDI Co., Ltd., Yongin-si, Gyeonggi-do 17084 (KR)
(72) Inventor: Ko, Heejung, 17084 Yongin-si, Gyeonggi-do (KR); Kim, Kijung, 17084 Yongin-si, Gyeonggi-do (KR); Park, Yongjin, 17084 Yongin-si, Gyeonggi-do (KR); Woo, Byongchul, 17084 Yongin-si, Gyeonggi-do (KR); Lee, Jong-Ha, 17084 Yongin-si, Gyeonggi-do (KR)
(74) Representative: Gulde & Partner

(56) References cited:
- EP-A1- 3 783 713
- CN-A- 106 159 350
- US-A1- 2012 315 513
- US-A1- 2016 190 607
- US-A1- 2017 207 491
- US-B1- 7 341 802

## Description

### BACKGROUND

### 1. Field

Aspects of embodiments of the present invention relate to a rechargeable battery.

### 2. Description of the Related Art

A rechargeable battery differs from a primary battery in that it can be repeatedly charged and discharged, while the latter is incapable of being recharged. Low-capacity rechargeable batteries may be used in portable electronic devices, such as mobile phones, laptop computers, and camcorders, and large-capacity batteries are widely used as power sources for driving a motor, such as for hybrid vehicles.

Representative rechargeable batteries include a nickel-cadmium (NiCd) battery, a nickel metal hydride (NiMH) battery, a lithium (Li) battery, and a lithium ion (Li ion) rechargeable battery. In particular, lithium ion rechargeable batteries are about three times higher in operating voltage than the nickel-cadmium batteries or nickel metal hydride batteries, which are widely used as power sources for portable electronic equipment. Further, lithium ion rechargeable batteries is widely used because of its high energy density per unit weight.

In particular, in recent years, as the demand for wearable devices, such as headphones, earphones, smartwatches, and body-attached medical devices using Bluetooth increases, the need for ultra-small rechargeable batteries with high energy density is increasing.

Such a micro rechargeable battery includes an electrode terminal positioned on an outer surface thereof and an electrode assembly disposed inside and connected to the electrode terminal.

The above information disclosed in this Background section is only for enhancement of understanding of the background of the invention, and, therefore, it may contain information that does not form the prior art that is already known in this country to a person of ordinary skill in the art.

US 7341802 B1, CN 106159350 A, US 20160190607 A1 and EP 3783713 A1 disclose a rechargeable battery in which the cap plate and the electrode terminal is made of different materials or of same materials.

### SUMMARY

The invention is defined in the appended claims. According to an aspect of embodiments of the present invention, a micro rechargeable battery capable of being manufactured with various metals is provided.

According to one or more embodiments of the present invention, a rechargeable battery is provided as defined in claim 1.

The electrode terminal may be electrically connected to, preferably directly electrically connected to a positive electrode of the electrode assembly, and may be made of a same metal as an electrode current collector of the positive electrode.

The electrode terminal may be made of aluminum.

The cap plate may be electrically connected to, preferably directly electrically connected to a negative electrode of the electrode assembly, and may be made of a different metal from that of an electrode current collector of the negative electrode.

The cap plate may be made of stainless steel or nickel.

The cap plate may be welded to, preferably directly welded to the case, and the cap plate and the case may be made of a same metal.

The rechargeable battery may further include a thermal bonding layer positioned between the cap plate and the flange portion and insulatingly bonded between the cap plate and the flange portion.

The thermal bonding layer may melt at a predetermined temperature.

According to embodiments of the present invention, a micro rechargeable battery capable of being manufactured with various metals is provided.

### BRIEF DESCRIPTION OF THE DRAWINGS

FIG. 1 illustrates a perspective view of a rechargeable battery according to an embodiment of the present invention.
FIG. 2 illustrates a cross-sectional view taken along the line II-II of FIG. 1.
FIG. 3 illustrates a cross-sectional view of a region "A" of FIG. 2.
FIG. 4 illustrates a cross-sectional view of a rechargeable battery according to an embodiment of the present invention.
FIG. 5 illustrates a cross-sectional view of a region "B" of FIG. 4.

### DESCRIPTION OF REFERENCE DESIGNATORS

| | | | |
|---|---|---|---|
| 11: | first electrode | 12: | second electrode |
| 13: | separator | 30: | step portion |
| 41: | flange portion | 42: | protrusion |
| 100: | electrode assembly | 200: | case |
| 300: | cap plate | 400: | electrode terminal |
| 500: | thermal bonding layer | | |

### DETAILED DESCRIPTION

The present invention will be described more fully herein with reference to the accompanying drawings, in which some example embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

In addition, unless explicitly described to the contrary, it is to be understood that terms such as "comprises," "includes," or "have" used in the present specification specify the presence of stated features, numerals, steps, operations, components, parts, or a combination thereof, but do not preclude the presence or addition of one or more other features, numerals, steps, operations, components, parts, or a combination thereof.

Also, in this specification, it is to be understood that when one component is referred to as being "connected" or "coupled" to another component, it may be connected or coupled directly to the other component or connected or coupled to another component with one or more other components intervening therebetween.

Singular forms are to include plural forms unless the context clearly indicates otherwise.

It is to be understood that, although the terms "first," "second," etc. may be used herein to describe various elements, these elements should not be limited by these terms. These terms are used to distinguish one element from another. For example, a first element could be termed a "second" element, and, similarly, a second element could be termed a "first" element, without departing from the scope of example embodiments of the inventive concept. The terms of a singular form may include plural forms unless the context clearly indicates otherwise.

In addition, terms such as "below," "lower," "above," "upper," and the like are used to describe the relationship of the configurations shown in the drawings. However, the terms are used as a relative concept and are described with reference to the direction indicated in the drawings.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, a rechargeable battery according to an embodiment will be described with reference to the drawings.

The rechargeable battery according to an embodiment of the present invention, which is a micro rechargeable battery, may be a coin cell or button cell battery, but the present invention is not limited thereto, and may be a cylindrical or pin-type battery.

Herein, the coin cell or button cell battery, which is a thin coin or button cell, may indicate a battery in which a ratio of a height to a diameter (height/diameter) is 1 or less, 0.9 or less, or 0.8 or less, but the present invention is not limited thereto.

In an embodiment, the coin cell or the button cell battery is cylindrical, such that a horizontal cross-section thereof is circular, but the present invention is not limited thereto, and the horizontal cross-section may have an oval or polygonal shape. In this case, a diameter may indicate a maximum distance based on a horizontal direction of the battery, and a height may indicate a maximum distance (distance from a flat bottom surface to a flat top surface) based on a vertical direction of the battery.

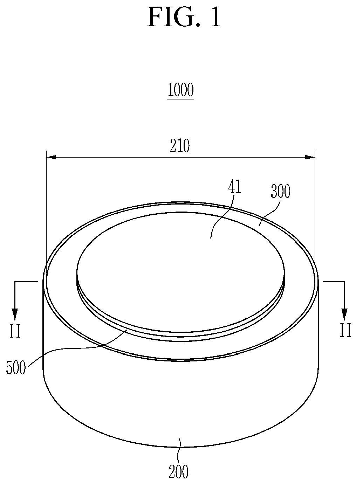

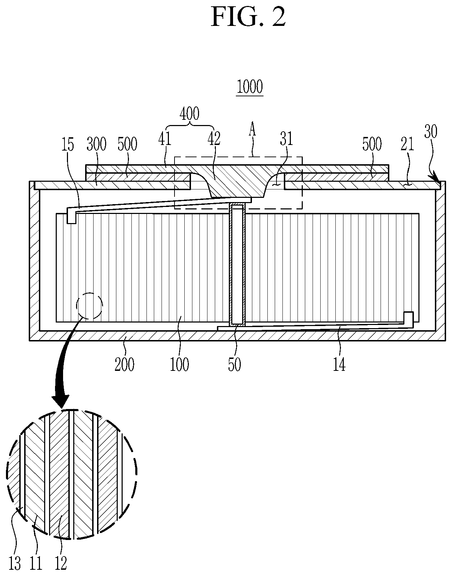

FIG. 1 illustrates a perspective view of a rechargeable battery according to an embodiment of the present invention; and FIG. 2 illustrates a cross-sectional view taken along the line II-II of FIG. 1.

Referring to FIG. 1 and FIG. 2, a rechargeable battery 1000 according to an embodiment of the present invention includes an electrode assembly 100, a case 200 having an inner space accommodating the electrode assembly 100, a cap plate 300 coupled to the case 200 to seal the inner space, and an electrode terminal 400 electrically connected to the electrode assembly 100 through the cap plate 300.

A lower surface of the electrode assembly 100 faces an inner bottom surface of the case 200, and an upper surface of the electrode assembly 100 faces a lower surface of the cap plate 300 covering an opening 21 of the case 200.

The electrode assembly 100 includes a first electrode 11, a second electrode 12, and a separator 13, and the first electrode 11 and the second electrode 12 are respectively disposed at opposite sides of the separator 13 which is made of an electrically insulating material. However, the present invention is not limited thereto.

In an embodiment, the first electrode 11 includes an electrode active region, which is an area where an active material is applied on a thin plate formed by using a long strip-shaped metal foil, and an electrode uncoated region, which is an area where the active material is not applied, and a first electrode tab 14 may be connected to, preferably directly connected the electrode uncoated region.

In an embodiment, the electrode uncoated region may be formed at opposite ends of the electrode active region, that is, at opposite ends of the first electrode 11 in a longitudinal direction, but the present invention is not limited thereto, and the electrode uncoated region may be formed at one end thereof. In an embodiment, the first electrode 11 may be a negative electrode, and the electrode active region may be coated with an active material, such as graphite or carbon, on a metal foil, such as a copper or nickel foil.

In an embodiment, the first electrode tab 14 is electrically connected to, preferably directly electrically connected to the electrode uncoated region of the first electrode 11 of the electrode assembly 100, and protrudes from the electrode assembly 100 and is welded to, preferably directly welded to a bottom surface of the case 200 to electrically connect, preferably directly electrically connect to the first electrode 11 and the case 200. Accordingly, the case 200 connected to, preferably directly connected to the first electrode tab 14 has a same polarity as that of the first electrode 11.

In an embodiment, the second electrode 12 includes an electrode active region, which is an area where an active material is applied on a thin plate formed by using a long strip-shaped metal foil, and an electrode uncoated region, which is an area where the active material is not applied, and a second electrode tab 15 may be connected to, preferably directly connected to the electrode uncoated region.

In an embodiment, the electrode uncoated region may be formed at opposite ends of the electrode active region, that is, at opposite ends of the second electrode 12 in a longitudinal direction, but the present invention is not limited thereto, and the electrode uncoated region may be formed at one end thereof.

The second electrode tab 15 may be connected to, preferably directly connected to the electrode uncoated region of the second electrode 12, and the second electrode tab 15 may protrude from the second electrode 12 to be electrically connected to, preferably directly electrically connected to the electrode terminal 400. The second electrode tab 15 is made of an electrically conductive material, such as nickel or copper, and may be connected to, preferably directly connected to the electrode uncoated region by welding. In an embodiment, the welding may be laser welding.

In an embodiment, the second electrode 12 may be an anode, and an active material, such as a transition metal oxide, may be applied to a metal foil, such as aluminum.

In an embodiment, the second electrode tab 15 is electrically connected to, preferably directly electrically connected to the electrode uncoated region of the second electrode 12 of the electrode assembly 100, and protrudes from the electrode assembly 100 and is welded to, preferably directly welded to a lower surface of the electrode terminal 400 to electrically connect, preferably to directly electrically connect the second electrode 12 and the electrode terminal 400. The electrode terminal 400 has a same polarity as that of the second electrode 12 by the second electrode tab 15.

The separator 13 is positioned between the first electrode 11 and the second electrode 12, and prevents or substantially prevents a short circuit therebetween and enables the movement of lithium ions. The separator 13 may be made of, e.g., a composite film of polyethylene, polypropylene, or polyethylene and polypropylene.

In an embodiment, a width of the separator 13 may be equal to or greater than that of the first electrode 11 and the second electrode 12, and the width of the first electrode 11 may be greater than that of the second electrode 12. In this case, the width is a length in a direction in which the electrode assembly is inserted into the case.

In an embodiment, the electrode assembly 100 may have a jelly-roll shape by winding the first electrode 11, the separator 13, and the second electrode 12 around a rotation axis in an overlapping state, but the present invention is not limited thereto, and may have a structure (not illustrated) in which a first electrode, a separator, and a second electrode which are of a sheet type are repeatedly stacked.

In an embodiment, the electrode assembly 100 may be covered with an insulating tape (not illustrated) along an external circumferential surface thereof in a radial direction. The insulating tape electrically insulates between the external circumferential surface of the electrode assembly 100 and an inner surface of the case 200, while protecting the outside of the electrode assembly 100.

In an embodiment, the electrode assembly 100 may be accommodated in the case 200 together with an electrolyte in a direction that is parallel to a rotation axis of the electrode assembly 100. In an embodiment, the electrolyte solution may be composed of an organic solvent, such as any of EC, PC, DEC, EMC, and DMC, and a Li salt such as LiPF₆ and LiBF₄. The electrolyte solution may be in a liquid, solid, or gel state.

In an embodiment, a center pin 50 penetrating a center of the electrode assembly 100 in a vertical direction may be positioned at the center of the electrode assembly 100, and may support the first electrode tab 14 and the second electrode tab 15.

The case 200 may have a space for accommodating the electrode assembly 100 and an electrolyte, and may have an opening 21 at one side. The electrode assembly 100 may be inserted through the opening 21 and accommodated in the inner space of the case 200. In an embodiment, the case 200 may have a cylindrical shape having a low height, but the present invention is not limited thereto, and may have any of various shapes. The case 200 may accommodate any of various known electrolyte solutions together with the electrode assembly 100, and, in an embodiment, the case 200 may be made of stainless steel.

An inner bottom surface of the case 200 is connected to the first electrode 11 of the electrode assembly 100 by the first electrode tab 14, such that the case 200 has the same polarity as that of the first electrode 11.

An outer surface of the case 200 may be a first electrode terminal of the rechargeable battery 1000, and an outer surface of the electrode terminal 400 may be a second electrode terminal of the rechargeable battery 1000.

The cap plate 300 sealing the inner space of the case 200 and the electrode terminal 400 may be coupled to the opening 21 of the case 200, and, in an embodiment, the cap plate 300 may be coupled to, preferably directly coupled to the opening 21 by welding.

The cap plate 300 may be formed to have a shape corresponding to the opening 21, and, in an embodiment, a step portion 30 may be formed in the opening 21 such that the cap plate 300 may be easily seated.

In an embodiment, a terminal hole 31 is formed in a center of the cap plate 300, and corresponds to the center of the electrode assembly 100 and exposes an upper portion of the electrode assembly 100. The cap plate 300 may have a ring shape due to the terminal hole 31 formed in the center thereof.

The cap plate 300 may be coupled to, preferably directly coupled to the case 200 to have the same polarity as that of the first electrode 11, and an outer surface of the cap plate 300 may serve as a first electrode terminal of the rechargeable battery 1000. In an embodiment, the cap plate 300 includes stainless steel, but the present invention is not limited thereto, and the cap plate 300 may include metals, such as any of aluminum, nickel, and copper.

The electrode terminal 400 may be bonded to the cap plate 300 of a different polarity in an insulated state, and may be electrically connected to, preferably directly electrically connected to the second electrode 12 of the electrode assembly through the terminal hole 31 of the cap plate 300. Accordingly, the electrode terminal 400 may be a second electrode terminal of the rechargeable battery 1000.

In an embodiment, the electrode terminal 400 may include stainless steel, but the present invention is not limited thereto, and may include metals, such as any of aluminum, nickel, and copper.

In an embodiment, the case 200 and the cap plate 300 may be connected to the first electrode 11, which is a negative electrode, such that the first electrode terminal is a negative terminal, and the electrode terminal 400 may be electrically connected to the second electrode 12, which is a positive electrode, such that the second electrode terminal may be a positive terminal.

In an embodiment, the case 200 and the cap plate 300 may be made of a same material, and the electrode terminal 400 may have a lower ionization tendency as compared with the case 200 and the cap plate 300. In an embodiment, the case 200 and the cap plate 300 may have a higher ionization tendency as compared with copper, which is an electrode current collector of the first electrode.

For example, the electrode terminal 400 may be made of aluminum, and the case 200 and the cap plate 300 may be made of stainless steel, nickel, or nickel-plated copper.

Since the electrode terminal 400 may be formed into any of various shapes depending on a shape of the battery, the electrode terminal 400 may be made of aluminum, which is easier to form than stainless steel.

In addition, when contacting the electrode terminal of stainless steel having relatively high resistance, the case 200 and the cap plate 300 may be selected from various materials other than stainless steel, and may further include a plating layer in order to reduce surface resistance.

In the above embodiment, the first electrode 11 is a negative electrode and the second electrode 12 is a positive electrode, or vice versa. That is, the first electrode 11 as a positive electrode may be electrically connected to, preferably directly electrically connected to the case 200 and the cap plate 300 through the first electrode tab 14, and the second electrode 12 as a negative electrode may be electrically connected to, preferably directly electrically connected to the electrode terminal 400 through the second electrode tab 15. In this case, the case 200 and the cap plate 300 as the first electrode may be made of aluminum, and the electrode terminal 400 as the second electrode may be made of stainless steel, nickel, or the like.

In an embodiment, the electrode terminal 400 includes a flange portion 41 and a protrusion 42, the flange portion 41 may have a wider area (or diameter) than the protrusion 42, and the flange portion 41 has a thinner thickness than the protrusion 42. The protrusion 42 and the flange portion 41 may be integrally formed.

The protrusion 42 of the electrode terminal 400 is inserted into the terminal hole 31 to cover the terminal hole 31 of the cap plate 300 together with the flange portion 41 so as to seal an interior of the case 200. The protrusion 42 of the electrode terminal 400 is electrically connected to, preferably directly electrically connected to the second electrode tab 15 of the electrode assembly 100, such that the electrode terminal 400 has the same polarity as that of the second electrode 12. An outer surface of the flange portion 41 may serve as a second electrode terminal of the rechargeable battery 1000.

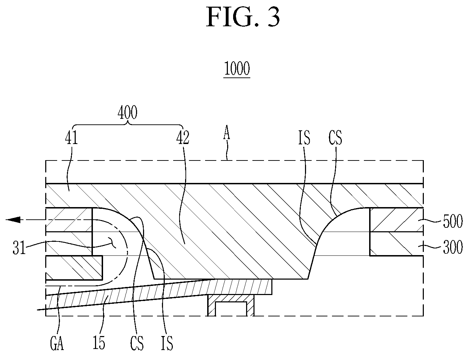

FIG. 3 illustrates an enlarged view of a region "A" of FIG. 2.

Referring to FIG. 3, in an embodiment, an outer surface of the protrusion 42 includes a curved surface CS and an inclined surface IS. The protrusion 42 includes the curved surface CS extending from a lower surface of the flange portion 41 and the inclined surface IS extending from the curved surface CS and passing through the terminal hole 31.

The curved surface CS may have a radius of curvature (e.g. a predetermined radius of curvature), and the inclined surface IS may have a slope (e.g., a predetermined slope). Accordingly, a surface of the protrusion 42 may be relatively far away from an end portion of the cap plate 300 exposed through the terminal hole 31 from the curved surface CS to an end portion of the inclined surface IS. As such, when the inclined surface IS is formed, a distance of the protrusion 42 positioned in a horizontal direction between the cap plate 300 and the electrode terminal 400 is increased, such that even when an alignment error occurs, a short circuit between the cap plate 300 and the protrusion 42 of different polarities may be suppressed.

Referring to FIG. 1 and 2 again, the lower surface of the flange portion 41 of the electrode terminal 400 may be bonded to, preferably directly bonded to a first surface of the cap plate 300 through a thermal bonding layer 500. In an embodiment, the opening 21 of the case 200, in which the electrode assembly 100 is accommodated, is completely sealed by the cap plate 300, the electrode terminal 400, and the thermal bonding layer 500 by bonding the thermal bonding layer 500 between the cap plate 300 and the electrode terminal 400.

In an embodiment, the thermal bonding layer 500 may be thermally bonded between the cap plate 300 and the flange portion 41 of the electrode terminal 400 by using heat or a laser beam.

The thermal bonding layer 500 is made of an insulating material to insulate between the electrode terminal 400 and the cap plate 300. The thermal bonding layer 500 may include any of various known materials for insulatingly bonding between the cap plate 300 and the electrode terminal 400.

In an embodiment, the thermal bonding layer 500 is in a state that is cured by heat, but may melt at a predetermined temperature. In an embodiment, the predetermined temperature at which the thermal bonding layer 500 melts may exceed a temperature of heat for curing the thermal bonding layer 500, but the present invention is not limited thereto.

For example, the thermal bonding layer 500 may include any of a thermosetting resin and a thermoplastic resin. In an embodiment, the thermosetting resin and the thermoplastic resin of the thermal bonding layer 500 may be stacked to include a plurality of layers, but the prevent invention is not limited thereto. In an embodiment, the thermosetting resin of the thermal bonding layer 500 is in a state that is cured by heat, and may include any of various known thermosetting resins, such as any of a phenol resin, a urea resin, a melamine resin, an epoxy resin, and a polyester resin. In an embodiment, the thermoplastic resin of the thermal bonding layer 500 includes, but is not limited to, a polypropylene resin that melts at a predetermined temperature, and may include any of various known thermoplastic resins, such as any of polystyrene, polyethylene, and a polyvinyl chloride resin.

In an embodiment, the thermal bonding layer 500 melts at a temperature, e.g. a predetermined temperature, and a portion from which the thermal bonding layer 500 is removed serves as a ventilation passage through which gas may be discharged. However, the present invention is not limited thereto.

In an embodiment, when an unintended event such as, e.g., a short circuit between both electrodes occurs in the internal space of the rechargeable battery 1000, the temperature is increased, the thermal bonding layer 500 melts due to the increased temperature, reducing the volume, and a ventilation passage through which gas GA generated inside the rechargeable battery is discharged to the outside is formed. An internal gas is guided from the internal space of the rechargeable battery 1000 along the curved surface CS of the electrode terminal 400 to a space between the flange portion 41 and the cap plate 300, which is a vent passage, to be rapidly discharged to the outside, so as to suppress an explosion risk of the rechargeable battery 1000.

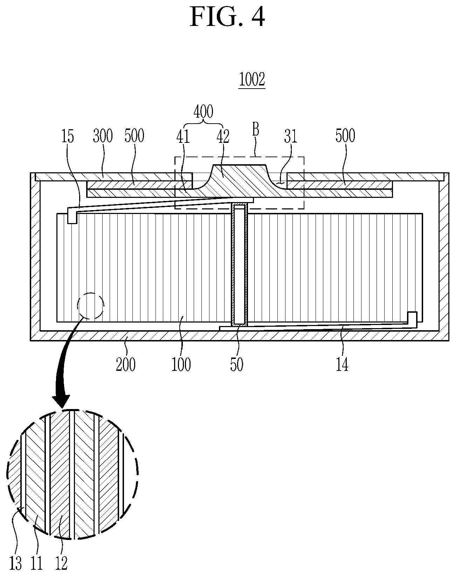

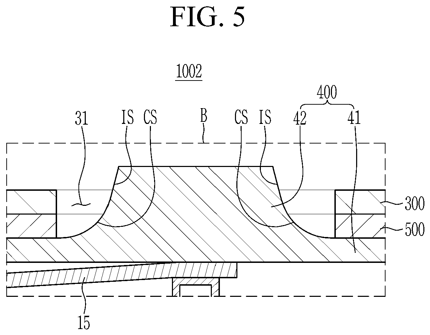

FIG. 4 illustrates a cross-sectional view of a rechargeable battery according to an embodiment of the present invention; and FIG. 5 illustrates a view of a region "B" of FIG. 4.

A rechargeable battery 1002 according to an embodiment of the present invention illustrated in FIG. 4 and FIG. 5 is substantially the same as the rechargeable battery of FIG. 1 to FIG. 3, and different parts will be mainly described in further detail.

Referring to FIG. 4, according to an embodiment of the present invention, the rechargeable battery 1002 includes an electrode assembly 100, a case 200, a cap plate 300, an electrode terminal 400, and a thermal bonding layer 500.

The electrode terminal 400 is electrically connected to, preferably directly electrically connected to the second electrode 12, and is insulatedly bonded to the cap plate 300 through the thermal bonding layer 500. The electrode terminal 400 covers the terminal hole 31 of the cap plate 300. The electrode terminal 400 is positioned between the cap plate 300 and the electrode assembly 100.

The electrode terminal 400 covers a central area of the opening 21 of the case 200 exposed by the terminal hole 31 of the cap plate 300. In an embodiment, the electrode terminal 400 covers, preferably fully covers the central area of the opening 21 and the cap plate 300 covers, preferably fully covers an outer area of the opening 21, such that the opening 21 of the case 200 is completely sealed by the electrode terminal 400 and the cap plate 300. The electrode terminal 400 is connected to, preferably directly connected to the second electrode tab 15 of the electrode assembly 100 to be electrically connected to, preferably directly electrically connected to the second electrode 12 of the electrode assembly 100.

The electrode terminal 400 includes a flange portion 41 and a protrusion 42. The flange portion 41 is positioned between the cap plate 300 and the electrode assembly 100 in the case 200, and overlaps the cap plate 300 to cover the terminal hole 31.

An upper surface of the flange portion 41 is in contact with, preferably in direct contact with the thermal bonding layer 500, and the flange portion 41 is insulatedly bonded to, preferably directly insulatedly bonded to the cap plate 300 by the thermal bonding layer 500. In an embodiment, a lower surface of the flange portion 41 is electrically connected to, preferably directly electrically connected to the second electrode tab 15. Since the flange portion 41 is connected to, preferably directly connected to the second electrode tab 15, the protrusion 42 and the flange portion 41 of the electrode terminal 400 have a same polarity as that of the second electrode 12.

The protrusion 42 passes through the terminal hole 31 to be exposed outside the case 200. An outer surface of the protrusion 42 may serve as a second electrode terminal of the rechargeable battery 1002.

The outer surface of the protrusion 42 may be positioned on a same plane as the outer surface of the cap plate 300 or on a different plane. For example, a height of the outer surface of the protrusion 42 may be the same as that of the outer surface of the cap plate 300, but the present invention is not limited thereto, and the height of the outer surface of the protrusion 42 may be higher or lower than the height of the outer surface of the cap plate 300.

In an embodiment, an outer surface of the protrusion 42 includes a curved surface CS and an inclined surface IS.

The protrusion 42 includes the curved surface CS extending from a lower surface of the flange portion 41 and the inclined surface IS extending from the curved surface CS and passing through the terminal hole 31.

The curved surface CS may have a radius of curvature, e.g. a predetermined radius of curvature, and the inclined surface IS may have a slope, e.g. a predetermined slope. Accordingly, a surface of the protrusion 42 may be relatively far away from the cap plate 300, which is an edge of the terminal hole 31, from the curved surface CS to an end portion of the inclined surface IS. As such, when the inclined surface IS is formed, a distance of the protrusion 42 positioned in a horizontal direction between the cap plate 300 and the electrode terminal 400 is increased, such that even when an alignment error occurs, a short circuit between the cap plate 300 and the protrusion 42 of different polarities may be suppressed.

As such, in an embodiment, when the flange portion 41 is connected through the thermal bonding layer 500 within the case 200, an event may occur to increase an internal temperature of the case 200, and resultantly, the thermal bonding layer 500 may melt such that the flange portion 41 may be separated from the cap plate 300 and moved in a direction of gravity, to open the terminal hole 31. Therefore, it is possible to prevent or substantially prevent explosion by discharging the internal gas to the outside more quickly as compared with that of the embodiment described with reference to FIG. 1.

## Claims

1. A rechargeable battery (1000) comprising:
an electrode assembly (100) comprising a first electrode (11), a second electrode (12), and a separator (13) between the first electrode (11) and the second electrode (12);
a case (200) comprising an inner space to accommodate the electrode assembly (100) and having an opening (21) at a side thereof;
a cap plate (300) coupled to the opening (21) of the case (200) and comprising a terminal hole (31) to expose the inner space; and
an electrode terminal (400) electrically connected to the electrode assembly (100) through the terminal hole (31) and overlapping the cap plate (300),
wherein the cap plate (300) and the electrode terminal (400) are made of different metals, wherein
the cap plate (300) is electrically connected to the electrode assembly (100), and
the cap plate (300) and the electrode terminal (400) are respectively electrically connected to different electrodes (11, 12) of the electrode assembly (100),
wherein the cap plate (300) is made of a metal having a higher ionization tendency than that of an electrode (11, 12) of the electrode assembly (100) electrically connected to the cap plate (300), wherein the cap plate (300) is made of a metal having a lower ionization tendency than that of the electrode terminal (400),
wherein the electrode terminal (400) comprises:
a flange portion (41) configured to cover the terminal hole (31) and overlapping the cap plate (300); and
a protrusion (42) integrally formed with the flange portion (41) to protrude from the flange portion (41) toward the terminal hole (31),
wherein
an outer surface of the protrusion (42) comprises a curved surface (CS) and an inclined surface (IS), a distance from the curved surface (CS) to an end portion of the cap plate (300) exposed to the terminal hole (31) is shorter than a distance from the inclined surface (IS) to an end portion of the cap plate (300) exposed to the terminal hole (31), and
the distance from the inclined surface (IS) to the end portion of the cap plate (300) exposed to the terminal hole (31) becomes longer toward an end portion of the inclined surface (IS).

2. The rechargeable battery (1000) of claim 1, wherein the electrode terminal (400) is electrically connected to a positive electrode (12) of the electrode assembly (100), and is made of a same metal as an electrode current collector of the positive electrode (12).

3. The rechargeable battery (1000) of claim 2, wherein the electrode terminal (400) is made of aluminum.

4. The rechargeable battery (1000) according to any of the preceding claims 1 to 3, wherein the cap plate (300) is electrically connected to a negative electrode (11) of the electrode assembly (100), and is made of a different metal from that of an electrode current collector of the negative electrode (11).

5. The rechargeable battery (1000) of claim 4, wherein the cap plate (300) is made of stainless steel or nickel.

6. The rechargeable battery (1000) according to any of the preceding claims, wherein
the cap plate (300) is welded to the case (200), and
the cap plate (300) and the case (200) are made of a same metal.

7. The rechargeable battery (1000) of claim 1, further comprising a thermal bonding layer (500) between the cap plate (300) and the flange portion (41) and insulatingly bonded between the cap plate (300) and the flange portion (41).

8. The rechargeable battery (1000) of claim 7, wherein the thermal bonding layer (500) melts at a predetermined temperature.

## Patentansprüche

1. Wiederaufladbare Batterie (1000), die Folgendes umfasst:
eine Elektrodenanordnung (100), die eine erste Elektrode (11), eine zweite Elektrode (12) und einen Separator (13) zwischen der ersten Elektrode (11) und der zweiten Elektrode (12) umfasst;
ein Gehäuse (200), das einen Innenraum umfasst, der die Elektrodenanordnung (100) aufnimmt und eine Öffnung (21) an einer Seite davon aufweist;
ein Abdeckblech (300), das mit der Öffnung (21) des Gehäuses (200) gekoppelt ist und ein Anschlussloch (31) umfasst, um den Innenraum freizulegen; und
einen Elektrodenanschluss (400), der mit der Elektrodenanordnung (100) durch das Anschlussloch (31) elektrisch verbunden ist und das Abdeckblech (300) überlappt,
wobei das Abdeckblech (300) und der Elektrodenanschluss (400) aus verschiedenen Metallen hergestellt sind,
wobei
das Abdeckblech (300) mit der Elektrodenanordnung (100) elektrisch verbunden ist und
das Abdeckblech (300) und der Elektrodenanschluss (400) jeweils mit unterschiedlichen Elektroden (11, 12) der Elektrodenanordnung (100) elektrisch verbunden sind,
wobei das Abdeckblech (300) aus einem Metall hergestellt ist, das eine höhere Ionisierungsneigung als diejenige einer Elektrode (11, 12) der Elektrodenanordnung (100), die mit dem Abdeckblech (300) elektrisch verbunden ist, aufweist, wobei das Abdeckblech (300) aus einem Metall hergestellt ist, das eine geringere Ionisierungsneigung als diejenige des Elektrodenanschlusses (400) aufweist,
wobei der Elektrodenanschluss (400) Folgendes umfasst:
einen Flanschabschnitt (41), der dazu ausgestaltet ist, das Anschlussloch (31) zu bedecken, und das Abdeckblech (300) überlappt; und
einen Vorsprung (42), der einstückig mit dem Flanschabschnitt (41) dazu ausgebildet ist, von dem Flanschabschnitt (41) in Richtung des Anschlusslochs (31) zu ragen,
wobei
eine äußere Oberfläche des Vorsprungs (42) eine gewölbte Oberfläche (CS) und eine schräge Oberfläche (IS) umfasst, wobei ein Abstand von der gewölbten Oberfläche (CS) zu einem Endabschnitt des Abdeckblechs (300), der zu dem Anschlussloch (31) hin freiliegt, kürzer ist als ein Abstand von der schrägen Oberfläche (IS) zu einem Endabschnitt des Abdeckblechs (300), der zu dem Anschlussloch (31) hin freiliegt, und
der Abstand von der schrägen Oberfläche (IS) zu dem Endabschnitt des Abdeckblechs (300), der zu dem Anschlussloch (31) hin freiliegt, in Richtung eines Endabschnitts der schrägen Oberfläche (IS) länger wird.

2. Wiederaufladbare Batterie (1000) nach Anspruch 1, wobei der Elektrodenanschluss (400) mit einer positiven Elektrode (12) der Elektrodenanordnung (100) elektrisch verbunden ist und aus dem gleichen Metall wie ein Elektrodenstromabnehmer der positiven Elektrode (12) hergestellt ist.

3. Wiederaufladbare Batterie (1000) nach Anspruch 2, wobei der Elektrodenanschluss (400) aus Aluminium hergestellt ist.

4. Wiederaufladbare Batterie (1000) nach einem der vorangehenden Ansprüche 1 bis 3, wobei das Abdeckblech (300) mit einer negativen Elektrode (11) der Elektrodenanordnung (100) elektrisch verbunden ist und aus einem anderen Metall als ein Elektrodenstromabnehmer der negativen Elektrode (11) hergestellt ist.

5. Wiederaufladbare Batterie (1000) nach Anspruch 4, wobei das Abdeckblech (300) aus rostfreiem Stahl oder Nickel hergestellt ist.

6. Wiederaufladbare Batterie (1000) nach einem der vorangehenden Ansprüche, wobei
das Abdeckblech (300) mit dem Gehäuse (200) verschweißt ist und
das Abdeckblech (300) und das Gehäuse (200) aus dem gleichen Metall hergestellt sind.

7. Wiederaufladbare Batterie (1000) nach Anspruch 1, die ferner eine Schicht zum thermischen Verkleben (500) zwischen dem Abdeckblech (300) und dem Flanschabschnitt (41) und die zwischen dem Abdeckblech (300) und dem Flanschabschnitt (41) isolierend verklebt ist.

8. Wiederaufladbare Batterie (1000) nach Anspruch 7, wobei die Schicht zum thermischen Verkleben (500) bei einer zuvor bestimmten Temperatur schmilzt.

## Revendications

1. Batterie rechargeable (1000) comportant :
un ensemble d'électrodes (100) comportant une première électrode (11), une seconde électrode (12) et un séparateur (13) entre la première électrode (11) et la seconde électrode (12) ;
un boîtier (200) comportant un espace interne pour recevoir l'ensemble d'électrodes (100) et ayant une ouverture (21) sur un côté de celui-ci ;
une plaque formant capuchon (300) couplée à l'ouverture (21) du boîtier (200) et comportant un trou de borne (31) pour exposer l'espace interne ; et
une borne d'électrode (400) électriquement connectée à l'ensemble d'électrodes (100) à travers le trou de borne (31) et chevauchant la plaque formant capuchon (300),
dans laquelle la plaque formant capuchon (300) et la borne d'électrode (400) sont constituées de métaux différents, dans laquelle
la plaque formant capuchon (300) est électriquement connectée à l'ensemble d'électrodes (100), et
la plaque formant capuchon (300) et la borne d'électrode (400) sont respectivement électriquement connectées à différentes électrodes (11, 12) de l'ensemble d'électrodes (100),
dans laquelle la plaque formant capuchon (300) est constituée d'un métal ayant une plus haute tendance à l'ionisation que celle d'une électrode (11, 12) de l'ensemble d'électrodes (100) électriquement connectée à la plaque formant capuchon (300), dans laquelle la plaque formant capuchon (300) est constituée d'un métal ayant une plus basse tendance à l'ionisation que celle de la borne d'électrode (400),
dans laquelle la borne d'électrode (400) comporte :
une partie de bride (41) configurée pour recouvrir le trou de borne (31) et chevauchant la plaque formant capuchon (300) ; et
une saillie (42) formée d'un seul tenant avec la partie de bride (41) pour faire saillie à partir de la partie de bride (41) vers le trou de borne (31),
dans laquelle
une surface externe de la saillie (42) comporte une surface incurvée (CS) et une surface inclinée (IS), une distance de la surface incurvée (CS) à une partie d'extrémité de la plaque formant capuchon (300) exposée au trou de borne (31) est plus courte qu'une distance de la surface inclinée (IS) à une partie d'extrémité de la plaque formant capuchon (300) exposée au trou de borne (31), et
la distance de la surface inclinée (IS) à la partie d'extrémité de la plaque formant capuchon (300) exposée au trou de borne (31) devient plus longue vers une partie d'extrémité de la surface inclinée (IS).

2. Batterie rechargeable (1000) selon la revendication 1, dans laquelle la borne d'électrode (400) est électriquement connectée à une électrode positive (12) de l'ensemble d'électrodes (100), et est constituée d'un même métal qu'un collecteur de courant d'électrode de l'électrode positive (12).

3. Batterie rechargeable (1000) selon la revendication 2, dans laquelle la borne d'électrode (400) est constituée d'aluminium.

4. Batterie rechargeable (1000) selon l'une quelconque des revendications 1 à 3 précédentes, dans laquelle la plaque formant capuchon (300) est électriquement connectée à une électrode négative (11) de l'ensemble d'électrodes (100), et est constituée d'un métal différent de celui d'un collecteur de courant d'électrode de l'électrode négative (11).

5. Batterie rechargeable (1000) selon la revendication 4, dans laquelle la plaque formant capuchon (300) est constituée d'acier inoxydable ou de nickel.

6. Batterie rechargeable (1000) selon l'une quelconque des revendications précédentes, dans laquelle
la plaque formant capuchon (300) est soudée au boîtier (200), et
la plaque formant capuchon (300) et le boîtier (200) sont constitués d'un même métal.

7. Batterie rechargeable (1000) selon la revendication 1, comportant en outre une couche de liaison thermique (500) entre la plaque formant capuchon (300) et la partie de bride (41) et liée de manière isolante entre la plaque formant capuchon (300) et la partie de bride (41).

8. Batterie rechargeable (1000) selon la revendication 7, dans laquelle la couche de liaison thermique (500) fond à une température prédéterminée.
